# EUROPEAN PATENT APPLICATION

(11) **EP 1 186 917 A2**
(43) Date of publication of application: **13.03.2002**
(21) Application number: 01121299.0
(22) Date of filing: 05.09.2001
(51) Int. Cl.: G02B 6/12

(54) **Co-flow diffusion flame burner device for fabricating of optical waveguide**

(30) Priority: 05.09.2000 KR 2000052473
(71) Applicant: SAMSUNG ELECTRONICS CO., LTD., Suwon-City, Kyungki-do (KR)
(72) Inventor: Cho, Jae-Geol, Suwon-city, Kyungki-do (KR)
(74) Representative: Grünecker, Kinkeldey, Stockmair & Schwanhäusser Anwaltssozietät

(57) **Abstract**

The present invention provides a co-flow diffusion flame burner device for fabricating of an optical waveguide comprising a source material gas injection tube, through which a fuel gas, a source material to be mixed with the fuel gas and a dilution gas to control the temperature of the flame which is generated by the combustion of the fuel gas are injected; a shield gas injection tube, disposed coaxially with the source material gas injection tube at the exterior of the source material gas injection tube and through which a shield gas is injected to prevent particles produced by the combustion reaction of the fuel gas and a oxidation gas from sticking to the end of the injection tube; and an oxidation gas injection tube, disposed coaxially with the shield gas injection tube at the exterior of the shield gas injection tube and through which an oxidation gas is injected to react with the fuel gas.

## Description

### BACKGROUND OF THE INVENTION

### 1. Field of the Invention

The present invention relates to a device for fabricating of an optical waveguide, and more particularly to a co-flow diffusion flame burner device for fabricating of an optical waveguide.

### 2. Description of the Related Art

Generally, the optical waveguide which is used as an optical signal transmission medium for optical communication systems is fabricated by depositing a glass material such as SiO₂, GeO₂, P₂O₅ or B₂O₃ on a silicon substrate, tube, etc. Examples of the depositing method include an outside vapor deposition method, vapor-phase axial deposition method, flame hydrolysis deposition and the like.

Particularly, the flame hydrolysis deposition method is the method mainly used in fabricating optical waveguides and involves depositing a glass material on the silicon substrate by means of oxy/hydrogen flame generated from a co-flow diffusion flame burner device.

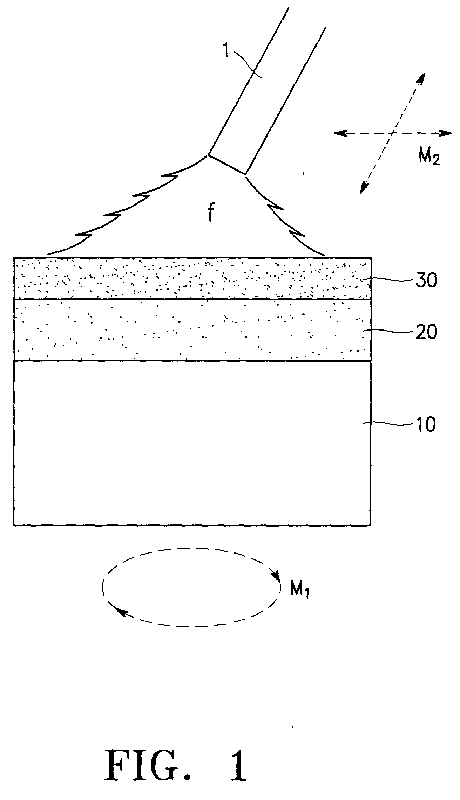

Fig. 1 is a schematic view illustrating procedures for forming a optical waveguide thin layer on a substrate according to the flame hydrolysis deposition method. As shown in Fig. 1, the source material undergoes hydrolysis and oxidation while passing through the oxy/hydrogen flame generated by co-flow diffusion flame burner device 1 to form glass soot as fine particles.

The glass soot are coagulated and grow by collision between particles while traveling through the flame and are deposited on the silicon substrate 10 by thermophoresis. At this point, by controlling the composition ratio of the source material, thin layers including an undercladding layer 20, a core layer 30 and an overcladding layer (not shown) are formed one after another.

In particular embodiments, the depositing may be carried out by disposing several sheets of silicon substrate 10 on a rotating turntable while traversing the co-flow diffusion flame burner device 1 (M₁) or by two-dimensionally and reciprocally moving the co-flow diffusion flame burner device 1 while fixing the silicon substrate 10 (M₂).

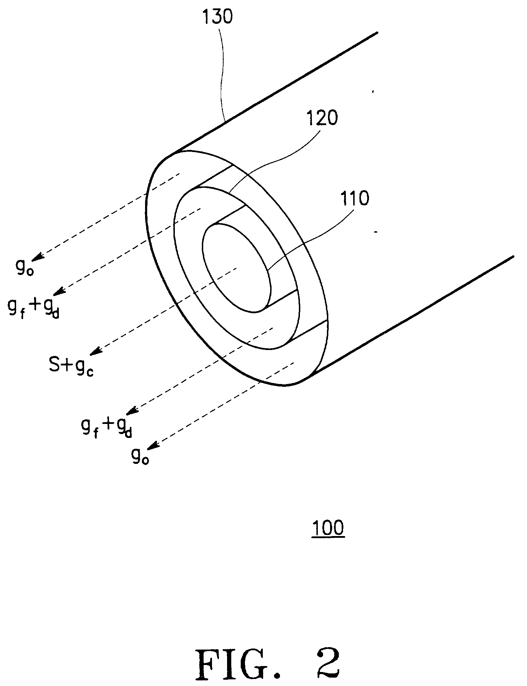

Fig. 2 is a perspective view of the co-flow diffusion flame burner device according to the prior art. As shown in Fig. 2, the co-flow diffusion flame burner device 100 according to the prior art consists of an injection tube for source material/carrier gas 110 having a plurality of tubes arranged co-axially, an injection tube for fuel/dilution gas 120 and an injection tube for oxidation gas 130.

The injection tube for source material/carrier gas 110 is a tube for injecting the source material S and carrier gas g_{c}, which is used for bubbling the source material. As the source material S, SiCl₄, GeCl₄, POCl₃, BCl₃ and the like may be used. Most of the above-listed materials except for BCl₃ are in a liquid state at a room temperature. Therefore, they have to be bubbled by the carrier gas g_{c}. The carrier gas g_{c} which can be used includes He, Ar, N₂ and the like.

The injection tube for fuel/dilution gas 120 is a tube for injecting fuel gas to generate flame and dilution gas g_{d} to control the temperature of the flame. As the fuel gas, H₂ is used and as the dilution gas, He, Ar and the like such as those which can be diluted in hydrogen.

The injection tube for oxidation gas 130 is a tube for injecting the oxidation gas gₒ to generate the flame by combustion reaction with the fuel gas g_{f}. As the oxidation gas gₒ, O₂ may be used.

Meanwhile, in the fabrication of the optical waveguide according to the flame hydrolysis deposition method, it is most important that thin layers to be formed over the silicon substrate have a uniform composition and thickness in order to provide a optical waveguide with excellent optical transmission properties. The formation of such thin layers can be accomplished by realizing uniform particle size distribution, composition and number concentration distribution of the glass soots produced from the co-flow diffusion flame burner device.

However, the co-flow diffusion flame burner device 100 in the prior art has a Gaussian type concentration distribution of source material in which the concentration is high at the center of the burner device and is gradually lowered away from the center. Therefore, the composition of the glass soots forming the thin layers on the silicon substrate varies with the distance from the center and thus it is difficult to form uniform thin layers.

Further, it is necessary that the source material should travel a certain distance from the injection nozzle before forming the glass soots. The traveling distance needed to form the particles is increased when the flux of the source material is higher. In the conventional co-flow diffusion flame burner device the concentration of the source material varies in accordance with the distance from the center, which leads to variation in time required to form particles and extent of the coagulation. Such variation consequently leads to variations in the particle size of the glass soots, the distribution of the size of the particles being close to a lognormal distribution. Further, an increase in the particle size and non-uniformity of the distribution of the particle size may cause problems during the sintering process, which is followed by the deposition process.

### SUMMARY OF THE INVENTION

Therefore, an object of the invention is to provide a co-flow diffusion flame burner device and a method for operating the co-flow diffusion flame burner device for fabricating of an optical waveguide, which can produce glass soots with a reduced particle size and a uniform distribution of the particle size.

Another object of the invention is to provide a co-flow diffusion flame burner device and a method for operating the co-flow diffusion flame burner device for fabricating of an optical waveguide which is capable of uniformly depositing the glass soots over a broad area.

In order to accomplish the above object, the co-flow diffusion flame burner device for fabricating of an optical waveguide according to the present invention comprises a source material gas injection tube, through which a fuel gas, a source material to be mixed with the fuel gas and a dilution gas to control the temperature of the flame which is generated by the combustion of the fuel gas are injected; an shield gas injection tube, disposed coaxially with the source material gas injection tube at the exterior of the source material gas injection tube and through which a shield gas is injected to prevent particles produced by the combustion reaction of the fuel gas and a oxidation gas from sticking to the end of the injection tube; and an oxidation gas injection tube, disposed coaxially with the shield gas injection tube at the exterior of the shield gas injection tube and through which an oxidation gas is injected to react with the fuel gas.

Further embodiments of an inventive co-flow diffusion flame burner device are disclosed in claim 2 and the dependent claims of claims 1 and 2.

Further, in order to accomplish the above object a method for operating a co-flow diffusion flame burner device is provided according to claims 7 and 8. Preferred embodiments are disclosed in the dependent method claims.

### BRIEF DESCRIPTION OF THE DRAWINGS

The above objects and advantages of the present invention will become more apparent by describing in detail preferred embodiments thereof with reference to the attached drawings in which:
Fig. 1 is a schematic view illustrating the procedure of forming thin layers of the optical waveguide on a substrate by the flame hydrolysis deposition method according to a conventional embodiment;
Fig. 2 is a perspective view illustrating a conventional co-flow diffusion flame burner device;
Fig. 3 is a perspective view illustrating a co-flow diffusion flame burner device according to a first preferred embodiment of the present invention; and
Fig. 4 is a perspective view illustrating a co-flow diffusion flame burner device according to a second preferred embodiment of the present invention.

### DETAILED DESCRIPTION OF THE PREFERRED EMBODIMENT

In the following description made in conjunction with a preferred embodiment of the present invention, a variety of specific elements such as constituent elements are described. The description of such elements has been made only for a better understanding of the present invention. Those skilled in the art will appreciate that various modifications, additions and substitutions to the specific element are possible, without departing from the scope and spirit of the invention as disclosed in the accompanying claims.

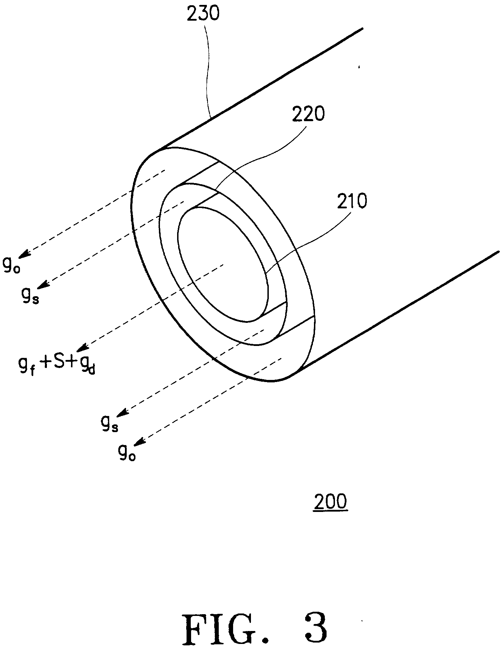

Fig. 3 is a perspective view illustrating a co-flow diffusion flame burner device according to the first preferred embodiment of the present invention. As shown in Fig. 3, the co-flow diffusion flame burner device 200 according to the first preferred embodiment of the present invention comprises a source material gas injection tube 210, a shield gas injection tube 220 and an oxidation gas injection tube 230.

### 1. Source material gas injection tube 210

The source material gas injection tube 210 is a tube for injecting a fuel gas g_{f}, a source material S to be mixed with the fuel gas g_{f} and a dilution gas g_{d} to control the temperature of the flame which is generated by the combustion of the fuel gas g_{f}. As the source material S, SiCl₄, GeCl₄, POCl₃, BCl₃ and the like may be used. Also, as the dilution gas, He, Ar, N₂ and the like such as those which can be diluted in hydrogen may be used. The feeding rate of the fuel gas g_{f} and the source material S is controlled by a mass flow controller.

The source material S is supplied into the bubbler prior to the fuel gas g_{f} or the dilution gas g_{d} and is mixed with the fuel gas g_{f} or the dilution gas g_{d} later when they pass through the bubbler. Thus, according to the present invention, the source material is not transferred by a specific carrier gas, unlike with the prior art, but is bubbled with the fuel gas g_{f} or the dilution gas g_{d} to be injected in a vapor phase with hydrogen through the source material gas injection tube 210 of the co-flow diffusion flame burner device 200. As a result, the spot where the source material is injected and the spot where the flame is generated by combustion of the fuel gas g_{f} are the same and hence, the glass soots are formed at the same time with the combustion of the fuel gas g_{f}.

Further, since hydrogen, which is used as the fuel gas, has a diffusion coefficient greater than those of the carrier gases which are used for transferring the source material in the prior art, the glass soots can be formed over the broad area in a short period of time. Therefore, the distribution of the glass soots within the flame is uniform and the coagulation effect of the particles is reduced, causing reduction in the size of the particles. Such uniform distribution and reduction in the particle size enables the sintering process after the deposition process to be favorably carried out.

### 2. Shield gas injection tube 220

The shield gas injection tube 220 is disposed coaxially with the source material gas injection tube 210 at the exterior of the source material gas injection tube 210. This arrangement allows injection of a shield gas gₛ to prevent particles produced by the combustion of the fuel gas from sticking to the end of the injection tube. As the shield gas gₛ, a small amount of an inert gas may be used.

### 3. Oxidation gas injection tube 230

The oxidation gas injection tube 230 is disposed coaxially with the shield material gas injection tube 220 at the exterior of the shield gas injection tube 220. This arrangement allows injection of an oxidation gas gₒ to react with the fuel gas. Oxygen may be used as the oxidation gas gₒ.

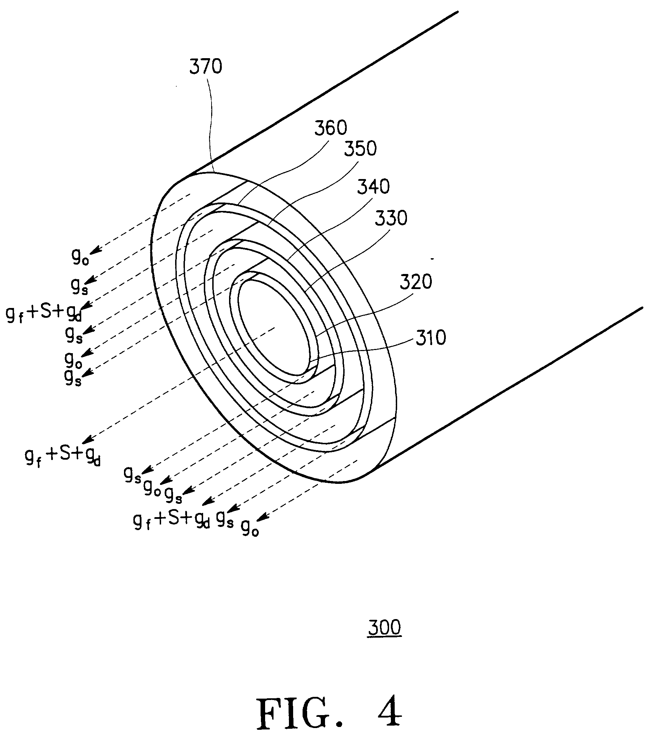

Fig. 4 is a perspective view illustrating a co-flow diffusion flame burner device according to the second preferred embodiment of the present invention. As shown in Fig. 4, the co-flow diffusion flame burner device 300 according to the second preferred embodiment of the present invention comprises a first source material gas injection tube 310, a first shield gas injection tube 320, a first oxidation gas injection tube 330, a second shield gas injection tube 340, a second source material gas injection tube 350, a third shield gas injection tube 360 and a second oxidation gas injection tube 370.

The co-flow diffusion flame burner device 300 according to the second preferred embodiment of the present invention is an application embodiment which is capable of forming uniform thin layers over an area being broader than the above described co-flow diffusion flame burner device 200 according the first preferred embodiment of the present invention. This device further comprises an source material gas injection tube, two shield gas injection tubes and an oxidation gas injection tube in addition to the source material gas injection tube, shield gas injection tube and oxidation gas injection tube.

The first source material gas injection tube 310 is a tube for injecting a fuel gas g_{f}, a source material S to be mixed with the fuel gas g_{f} and a dilution gas g_{d} to control the temperature of the flame which is generated by the combustion of the fuel gas g_{f}. As the source material S, SiCl₄, GeCl₄, POCl₃, BCl₃ and the like may be used. Also, as the dilution gas, He, Ar, N₂ and the like such as those which can be diluted in hydrogen may be used.

The first shield gas injection tube 320 is disposed coaxially with the first source material gas injection tube 310 at the exterior of the first source material gas injection tube 310. This arrangement allows injection of a shield gas gₛ to prevent particles produced by the combustion of the fuel gas g_{f} which is injected from the first source material gas injection tube 310 from sticking to the end of the injection tube. As the shield gas gₛ, a small amount of an inert gas may be used.

The first oxidation gas injection tube 330 is disposed coaxially with the first shield gas injection tube 320 at the exterior of the first shield gas injection tube 320. This arrangement allows injection of an oxidation gas gₒ to react with the fuel gas g_{f} which is injected from the first source material gas injection tube 310. Oxygen may be used as the oxidation gas gₒ.

The second shield gas injection tube 340 is disposed coaxially with the first oxidation gas injection tube 330 at the exterior of the first oxidation gas injection tube 330. This arrangement allows injection of a shield gas gₛ to prevent particles produced by the combustion reaction of the oxidation gas gₒ which is injected from the first oxidation gas injection tube 330 and the fuel gas g_{f} which is injected from the second source material gas injection tube 350 from sticking to the end of the injection tube.

The second source material gas injection tube 350 is disposed coaxially with the second shield gas injection tube 340 at the exterior of the second shield gas injection tube 340. This is a tube for injecting a fuel gas g_{f}, a source material S to be mixed with the fuel gas g_{f} and a dilution gas g_{d} to control the temperature of the flame which is generated by the combustion of the fuel gas g_{f}.

The third shield gas injection tube 360 is disposed coaxially with the second source material gas injection tube 350 at the exterior of the second source material gas injection tube 350. This arrangement allows injection of a shield gas gₛ to prevent particles produced by the combustion reaction of the fuel gas g_{f} which is injected from the second source material gas injection tube 350 and the oxidation gas gₒ from sticking to the end of the injection tube.

The second oxidation gas injection tube 370 is disposed coaxially with the third shield gas injection tube 360 at the exterior of the third shield gas injection tube 360. This arrangement allows injection of an oxidation gas gₒ to react with the fuel gas g_{f} which is injected from the second source material gas injection tube 350.

The co-flow diffusion flame burner device 300 according to the second preferred embodiment of the present invention generates double flames, by which glass soots can be formed. Therefore, it is possible to deposit uniform thin layers over a broader area.

Further, by providing additional shield gas injection tubes, source material gas injection tubes and oxidation gas injection tubes to the construction of the co-flow diffusion flame burner device 300 according to the second preferred embodiment of the present invention which can generate double flames, a co-flow diffusion multiple flames burner device which can generate multiple flames can be obtained. Such burner also may be included in the scope of the present invention.

As described above, the co-flow diffusion flame burner device according to the present invention can produce glass soots with reduced particle size and uniform particle size distribution and can deposit the glass soots uniformly over a broad area.

While this invention has been described in connection with what is presently considered to be the most practical and preferred embodiment, it is to be understood that the invention is not limited to the disclosed embodiment, but, on the contrary, it is intended to cover various modifications within the spirit and scope of the appended claims.

## Claims

1. A co-flow diffusion flame burner device (200) for fabricating of an optical waveguide comprising:
a source material gas injection tube (210), through which a fuel gas (g_{f}), a source material (S) to be mixed with the fuel gas (g_{f}) and a dilution gas (g_{d}) to control the temperature of the flame which is generated by the combustion of the fuel gas (g_{f}) are injected;
a shield gas injection tube, (220) disposed coaxially with the source material gas injection tube (210) at the exterior of the source material gas injection tube (210) and through which a shield gas (gs) is injected to prevent particles produced by the combustion reaction of the fuel gas (g_{f}) and a oxidation gas (gₒ) from sticking to the end of the injection tube; and
an oxidation gas injection tube (230), disposed coaxially with the shield gas injection tube (220) at the exterior of the shield gas injection tube (220) and through which an oxidation gas (gₒ) is injected to react with the fuel gas (g_{f}).

2. A co-flow diffusion flame burner device (300) for fabricating of an optical waveguide comprising:
a first source material gas injection tube (310) through which a fuel gas (g_{f}), a source material (S) to be mixed with the fuel gas (g_{f}) and a dilution gas (g_{d}) to control the temperature of the flame which is generated by the combustion of the fuel gas (g_{f}) are injected;
a first shield gas injection tube (320), disposed coaxially with the first source material gas injection tube (310) at the exterior of the first source material gas injection tube (310) and through which a shield gas (gs) is injected to prevent particles produced by the combustion of the fuel gas (g_{f}) from sticking to the end of the injection tube;
a first oxidation gas injection tube(330), disposed coaxially with the first shield gas injection tube (320) at the exterior of the first shield gas injection tube (320) and through which an oxidation gas (gₒ) is injected to react with the fuel gas (g_{f});
a second shield gas injection tube (350), disposed coaxially with the first oxidation gas injection tube (340) at the exterior of the first oxidation gas injection tube (340) and through which a shield gas is injected to prevent particles produced by the combustion reaction of the oxidation gas (gₒ) and the fuel gas (g_{f}) from sticking to the end of the injection tube;
a second source material gas injection tube(350), disposed coaxially with the second shield gas injection tube (340) at the exterior of the second shield gas injection tube (340) and through which a fuel gas (g_{f}), a source material (S) to be mixed with the fuel gas (g_{f}) and a dilution gas (g_{f}) to control the temperature of the flame which is generated by the combustion of the fuel gas are injected;
a third shield gas injection tube(360), disposed coaxially with the second source material gas injection tube (350) at the exterior of the second source material gas injection tube (350) and through which a shield gas (gs) is injected to prevent particles produced by the combustion reaction of the fuel gas (g_{f}) and the oxidation gas (gₒ) from sticking to the end of the injection tube; and
a second oxidation gas injection tube (370), disposed coaxially with the third shield gas injection tube (360) at the exterior of the third shield gas injection tube (360) and through which an oxidation gas (gₒ) is injected to react with the fuel gas (g_{f}).

3. The device according to claim 1 or 2, wherein the dilution gas (g_{d}) and/or the shield gas (gs) comprises an inert gas.

4. The device according to one of the claims 1 to 3, wherein a source material gas injection tube (210, 310, 350) is connected to a mass controller

5. The device according to one of the claims 1 to 4, wherein the separation between a shield gas injection tube (210, 310, 350) and a source material gas injection tube (210, 310, 350) is less than the separation between an oxidation gas injection tube (210, 310, 350) and a shield gas injection tube.

6. The device according to one of the claims 1 to 5, wherein a source material gas injection tube (210, 310, 350) is connected to two gas sources, in particular to the fuel gas (g_{f}) and the dilution gas (g_{d}) source and at least one bubbler is provided between one of the two gas sources and the source material gas injection tube (210, 310, 350).

7. Method for fabricating an optical waveguide comprising:
injecting a fuel gas (g_{f}), a source material (S) and a dilution gas (g_{d}) through a source material gas injection tube (210).
injecting a shield gas through a shield gas injection tube (220), which is disposed coaxially with the source material gas injection tube (210) at the exterior of the source material gas injection tube (210),
injecting an oxidation gas (gₒ) through a oxidation gas injection tube (230) which is disposed coaxially with the shield gas injection tube (220) at the exterior of the shield gas injection tube (220).

8. A method for fabricating an optical waveguide comprising:
injecting a fuel gas (g_{f}), a source material (S) and a dilution gas (g_{d}) through a first source material gas injection tube (310);
injecting a shield gas (gs) through a first shield gas injection tube (320), disposed coaxially with the first source material gas injection tube (310) at the exterior of the first source material gas injection tube (310);
injecting an oxidation gas(gₒ) through a first oxidation gas injection tube (330), disposed coaxially with the first shield gas injection tube (320) at the exterior of the first shield gas injection tube (320);
injecting a shield gas (gs) through a second shield gas injection tube (340), disposed coaxially with the first oxidation gas injection tube (330) at the exterior of the first oxidation gas injection tube (330);
injecting a fuel gas (g_{f}), a source material (S) and a dilution gas (g_{d}) through a second source material gas injection tube (350), disposed coaxially with the second shield gas injection tube (340) at the exterior of the second shield gas injection tube (340);
injecting a shield gas (gs) through a third shield gas injection tube (360), disposed coaxially with the second source material gas injection tube (350) at the exterior of the second source material gas injection tube (350); and
injecting an oxidation gas (gₒ) through a second oxidation gas injection tube (370), disposed coaxially with the third shield gas injection tube (360) at the exterior of the third shield gas injection tube (360).

9. Method according to claim 7 or 8, wherein the dilution gas (g_{d})and/or the shield gas (gs) comprises an inert gas.

10. Method according to one of the claims 7 to 9, wherein the source material (S) is mixed with the fuel gas (g_{f}) and/or the dilution gas (g_{d}) prior to insertion into the source material gas injection tube (210, 310, 350).

11. Method according to one of the claims 7 to 10, wherein the source material (S) is bubbled with the fuel gas (g_{f}) or the dilution gas (g_{d}).
